Europäisches Patentamt

European Patent Office

Office européen des brevets

(19)

(11) Numéro de publication : **0 299 852 B1**

(12)

# FASCICULE DE BREVET EUROPEEN

(45) Date de publication du fascicule du brevet :
**21.11.91 Bulletin 91/47**

(51) Int. Cl.$^5$ : **H02K 11/00**

(21) Numéro de dépôt : **88401768.2**

(22) Date de dépôt : **06.07.88**

(54) Dispositif d'antiparasitage d'un moteur à courant continu à inducteur à aimants permanents.

Le dossier contient des informations techniques présentées postérieurement au dépôt de la demande et ne figurant pas dans le présent fascicule.

(30) Priorité : **09.07.87 FR 8709774**

(43) Date de publication de la demande :
**18.01.89 Bulletin 89/03**

(45) Mention de la délivrance du brevet :
**21.11.91 Bulletin 91/47**

(84) Etats contractants désignés :
**DE ES GB IT SE**

(56) Documents cités :
**CH-A- 570 730
GB-A- 1 059 843
US-A- 3 488 538
US-A- 4 456 844**

(73) Titulaire : **ECIA - EQUIPEMENTS ET COMPOSANTS POUR L'INDUSTRIE AUTOMOBILE
F-25400 Audincourt (Doubs) (FR)**

(72) Inventeur : **Rudi, Alain
2 Rue Collin
F-90000 Essert (FR)**
Inventeur : **Cuchet, Daniel
1 Rue Massenet
F-25200 Montbeliard (FR)**

(74) Mandataire : **Bressand, Georges et al
c/o CABINET LAVOIX 2 Place d'Estienne d'Orves
F-75441 Paris Cédex 09 (FR)**

EP 0 299 852 B1

Jouve, 18, rue Saint-Denis, 75001 PARIS

## Description

La présente invention concerne un dispositif d'antiparasitage d    moteur à courant continu à inducteur à aimants permanents.

Si l'on considère un moteur relié à une source de tension par l'intermédiaire d'une ligne d'alimentation, comme un dipôle, il est constaté un effet de "miroir" se traduisant par le renvoi à partir du moteur, d'une façon périodique, et dans la ligne d'alimentation, d'une certaine puissance. Cette puissance renvoyée vers la source d'alimentation par effet "miroir" est une perte inutile dont la première influence est d'entraîner une diminution de rendement du moteur.

L'étude de cet effet fait ressortir qu'il se présente sous la forme de pics d'intensité encadrés par un phénomène oscillatoire. La fréquence de ces pics est égale à la fréquence de commutation f du moteur.

En effet, si N est le nombre de lames du collecteur du moteur et V la vitesse de rotation de celui-ci exprimée en tours par minute, on a la relation suivante : $f = N.V/60$, f étant la fréquence exprimée en Hz.

La tension d'alimentation délivrée par la source étant constante, les pics d'intensité du fait que le courant d'alimentation du moteur est constant, induisent des surtensions périodiques dans la ligne. Or, la haute fréquence superposée à la porteuse de fréquence f, liée à ces surtensions, rayonne une énergie électromagnétique qui induit des parasites extérieurs tout en parasitant tout le réseau électrique du véhicule.

Ceci est extrêmement néfaste pour la radio de bord du véhicule qui doit donc être équipée d'un dispositif d'antiparasitage indépendant.

Par ailleurs, ceci se révèle également très néfaste pour les véhicules spéciaux, par exemple de police, de gendarmerie ou de services de secours, ces véhicules étant pourvus de radio-émetteurs ou de radio-téléphones.

Ces parasites peuvent également perturber le fonctionnement de véhicules à commandes multiplexées qui sont actuellement à l'étude.

On connait par exemple d'après le document CH-A-570730, un micromoteur à courant continu dans lequel le rotor comporte plusieurs bobines connectées en série dont les points de connexion sont reliés respectivement aux segments correspondants du collecteur. Un dispositif commutateur à semi-conducteur est monté en parallèle avec chacune de ces bobines pour éviter la formation d'étincelles au niveau du collecteur, ces étincelles diminuant la durée de vie du moteur et pour limiter les impulsions de tension de grande amplitude, risquant de perturber des circuits annexes.

Ce dispositif présente cependant plusieurs inconvénients. En effet, il ne permet pas d'assurer un bon antiparasitage de la ligne d'alimentation du moteur car il agit au niveau des segments du collecteur du côté du rotor du moteur. L'intégration des dispositifs commutateurs à semi-conducteur du côté du rotor du moteur est par ailleurs extrêmement difficile à réaliser.

Enfin, un minimum d'étincelles est nécessaire au bon fonctionnement du moteur. En effet, ces étincelles créent un phénomène appelé " patine du collecteur" bien connu de l'homme de l'art, assurant un bon glissement des balais sur les lames du collecteur et donc un bon fonctionnement de celui-ci.

Il existe des moteurs électriques dits lents et des moteurs électriques dits rapides.

Les moteurs électriques dits lents ont en général, des nombres de lames au collecteur donc de commutations par tour, plus élevés que les moteurs dits rapides.

A titre d'exemple, si l'on prend un motoréducteur dit rapide de lève-vitre ou de réglage de siège, qui comporte huit lames au collecteur et dont la vitesse de rotation est de 7600 trs/mn, la fréquence des parasites engendrés par un tel moteur est :

$$f1 = \frac{8 \times 7600}{60} = 1013 \ Hz.$$

Si l'on prend un motoventilateur dit lent, à douze lames au collecteur et dont la vitesse de rotation est de 2000 trs/mn, on a :

$$f2 = \frac{12 \times 2000}{60} = 400 \ Hz.$$

Les parasites correspondant à ces basses fréquences, sont extrêmement difficiles à bloquer car ils échappent à la filtration par des dispositifs d'antiparasitage classiques. On est donc amené à étudier des dispositifs d'antiparasitage spécifiques qui présentent un certain nombre d'inconvénients, notamment au niveau de leur

2

prix, de leur encombrement et de leur poids. De plus, ces dispositifs d'antiparasitage affectent le rendement global de l'installation.

Le but de l'invention est donc de résoudre ces problèmes en proposant un dispositif d'antiparasitage qui soit simple, fiable et d'un prix de revient peu élevé.

A cet effet, l'invention a pour objet un dispositif d'antiparasitage d'un moteur à courant continu, à inducteur à aimants permanents, caractérisé en ce qu'il comporte au moins une varistance connectée en parallèle entre les bornes d'alimentation du moteur.

Avantageusement, ce dispositif comporte une varistance en parallèle sur chaque paire de balais du moteur.

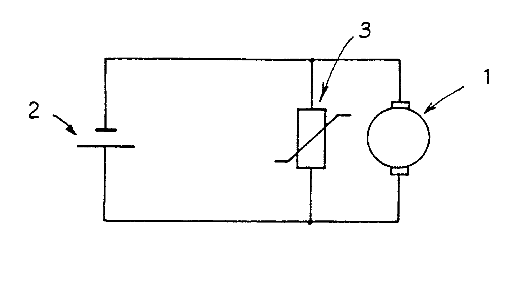

L'invention sera mieux comprise à l'aide de la description qui va suivre, donnée uniquement à titre d'exemple et faite en se référant au dessin annexé, qui représente un schéma d'un dispositif selon l'invention.

Ainsi qu'on peut le voir sur cette figure, un moteur électrique 1 par exemple de motoventilateur, à courant continu et à inducteur à aimants permanents, est connecté en parallèle aux bornes d'une source d'alimentation 2. Une varistance 3 de type connu en soi est connectée en parallèle entre les bornes d'alimentation du moteur.

Pour des raisons d'efficacité de l'antiparasitage, il est à noter que la varistance doit être connectée au plus près des balais du moteur, c'est à dire par exemple juste en parallèle sur le moteur. Avantageusement, il peut être prévu une varistance en parallèle aux bornes de chaque paire de balais du moteur.

Une varistance peut être assimilée à deux diodes Zener connectées en anti-série pour constituer un ensemble qui devient brutalement conducteur à partir d'un seuil de tension appliquée à ses bornes. Ainsi, il est possible d'éliminer les pics de tension provenant du moteur et engendrant les parasites. Une varistance est un organe non polarisé qui fonctionne de manière identique quel que soit le signe de la tension continue appliquée à ses bornes et qui, de ce fait, se prête bien à une utilisation sur des moteurs électriques tournant dans les deux sens de rotation par inversion de leur tension d'alimentation.

Cette varistance peut être connectée seule aux bornes du moteur ou aux bornes des balais de celui-ci, mais elle peut également être associée à des dispositifs d'antiparasitage classiques déjà utilisés.

Des essais effectués par la Demanderesse ont montré que les parasites sont réduits de manière appréciable. Ces essais ont également montré, de manière surprenante, que l'utilisation d'au moins une varistance en parallèle sur l'alimentation du moteur, agissait sur certaines caractéristiques de celui-ci et notamment sur son rendement et son couple de blocage qui sont augmentés.

En effet, en se référant au tableau I et II ci-après, on constate que pour des essais effectués sur des motoréducteurs du type MR24 fabriqués et distribués par la Demanderesse, alimentés sous une tension de 13,5 volts, et tournant le sens horaire, le rendement passait de 0,22 sans dispositif d'antiparasitage, à 0,23 avec une varistance connectée en parallèle sur les bornes d'alimentation. Ceci se traduit donc par une amélioration de 4,5% du rendement.

Par ailleurs, le couple de blocage est également augmenté de façon sensible.

TAF AU I

(SENS HORAIRE, SANS DISPOSITIF D'ANTIPARASITAGE)


POINT RENDEMENT MAXIMUM

RENDEMENT                        =    0,22

COUPLE                    N.M = 259,20 $10^{-2}$

PUISSANCE UTILE      WATTS =   16,29

PUISSANCE ABSORBEE   WATTS =   74,29

INTENSITE           AMPERES =    5,50

VITESSE             TRS/MN =   60,02


POINT PUISSANCE UTILE MAXIMUM

RENDEMENT                        =    0,18

COUPLE                    N.M = 466,19 $10^{-2}$

PUISSANCE UTILE      WATTS =   20,29

PUISSANCE ABSORBEE   WATTS = 110,78

INTENSITE           AMPERES =    8,21

VITESSE             TRS/MN =   41,57

POINT DE BLOCAGE

COUPLE DE BLOCAGE      N.M = 932,38 $10^{-2}$

INTENSITE           AMPERES =   14,29

PUISSANCE ABSORBEE   WATTS = 192,98


POINT C = 0


INTENSITE A COUPLE NUL    AMPERES =   2,12

VITESSE A VIDE REELLE     TRS/MN  = 83,13


POINT I = 0


COUPLE A INTENSITE NULLE      N.M = - 162,13 $10^{-2}$

VITESSE A VIDE THEORIQUE  TRS/MN =    123,10

<u>TABLEAU II</u>

<u>(SENS HORAIRE, AVEC VARISTANCE)</u>

POINT RENDEMENT MAXIMUM

```
RENDEMENT                        =    0,23
COUPLE                  N.M = 259,10 10-²
PUISSANCE UTILE     WATTS =   16,40
PUISSANCE ABSORBEE  WATTS =   72,10
INTENSITE           AMPERES =    5,34
VITESSE             TRS/MN =   60,45
```

POINT PUISSANCE UTILE MAXIMUM

```
RENDEMENT                        =    0,19
COUPLE                  N.M = 476,28 10-²
PUISSANCE UTILE     WATTS =   20,71
PUISSANCE ABSORBEE  WATTS = 110,03
INTENSITE           AMPERES =    8,15
VITESSE             TRS/MN =   41,52
```

POINT DE BLOCAGE

```
COUPLE DE BLOCAGE      N.M = 952,57 10-²
INTENSITE           AMPERES =   14,31
PUISSANCE ABSORBEE  WATTS = 193,23
```

POINT C = 0

```
INTENSITE A COUPLE NUL   AMPERES =   1,99
VITESSE A VIDE REELLE    TRS/MN  = 83,04
```

POINT I = 0

```
COUPLE A INTENSITE NULLE     N.M = -153,64 10-²
VITESSE A VIDE THEORIQUE TRS/MN     = 120,89
```

Lorsque l'on effectue des essais toujours sur des motoréducteurs MR24 fabriqués et distribués par la Demanderesse, mais cette fois-ci dans un sens de rotation anti-horaire, on peut constater dans les tableaux III et IV ci-après, que le rendement passe de 0,19 sans dispositif d'antiparasitage, à 0,21 avec une varistance connectée en parallèle entre les bornes d'alimentation. L'amélioration du rendement est donc de 10,5%.

Le couple de blocage est également augmenté.

## TABLEAU III

### (SENS ANTI-HORAIRE, SANS DISPOSITIF D'ANTIPARASITAGE)

```
POINT RENDEMENT MAXIMUM
RENDEMENT                              =    0,19
COUPLE                     N.M   =  221,54  10-²
PUISSANCE UTILE      WATTS  =   13,95
PUISSANCE ABSORBEE   WATTS  =   72,90
INTENSITE            AMPERES =    5,40
VITESSE              TRS/MN  =   60,12

POINT PUISSANCE UTILE MAXIMUM
RENDEMENT                              =    0,16
COUPLE                     N.M   =  395,60  10-²
PUISSANCE UTILE      WATTS  =   17,30
PUISSANCE ABSORBEE   WATTS  =  107,81
INTENSITE            AMPERES =    7,99
VITESSE              TRS/MN  =   41,75


POINT DE BLOCAGE
COUPLE DE BLOCAGE    N.M   =  791,20  10-²
INTENSITE            AMPERES =   13,86
PUISSANCE ABSORBEE   WATTS  =  187,17

POINT C = 0
INTENSITE A COUPLE NUL    AMPERES =  2,11
VITESSE A VIDE REELLE     TRS/MN  = 83,50


POINT I = 0


COUPLE A INTENSITE NULLE       N.M  = -141,89  10-²
VITESSE A VIDE THEORIQUE  TRS/MN  =  119,12
```

## TABLEAU IV

### (SENS ANTI-HORAIRE, AVEC VARISTANCE)

POINT RENDEMENT MAXIMUM

| | | |
|---|---|---|
| RENDEMENT | | = 0,21 |
| COUPLE | N.M | = 235,61 $10^{-2}$ |
| PUISSANCE UTILE | WATTS | = 14,74 |
| PUISSANCE ABSORBEE | WATTS | = 71,68 |
| INTENSITE | AMPERES | = 5,31 |
| VITESSE | TRS/MN | = 59,72 |

POINT PUISSANCE UTILE MAXIMUM

| | | |
|---|---|---|
| RENDEMENT | | = 0,17 |
| COUPLE | N.M | = 441,80 $10^{-2}$ |
| PUISSANCE UTILE | WATTS | = 18,12 |
| PUISSANCE ABSORBEE | WATTS | = 104,61 |
| INTENSITE | AMPERES | = 7,75 |
| VITESSE | TRS/MN | = 41,71 |

POINT DE BLOCAGE

| | | |
|---|---|---|
| COUPLE DE BLOCAGE | N.M | = 829,61 $10^{-2}$ |
| INTENSITE | AMPERES | = 13,40 |
| PUISSANCE ABSORBEE | WATTS | = 180,84 |

POINT C = 0

| | | |
|---|---|---|
| INTENSITE A COUPLE NUL | AMPERES | = 2,10 |
| VITESSE A VIDE REELLE | TRS/MN | = 83,41 |

POINT I = 0

| | | |
|---|---|---|
| COUPLE A INTENSITE NULLE | N.M | = -154,40 $10^{-2}$ |
| VITESSE A VIDE THEORIQUE | TRS/MN | = 120,84 |

L'utilisation d'une ou de plusieurs varistances en parallèle sur l'alimentation du moteur permet donc d'améliorer de façon surprenante le rendement du moteur, alors que les dispositifs d'antiparasitage classique diminuaient celui-ci.

## Revendications

1. Dispositif d'antiparasitage d'un moteur (1) à courant continu à inducteur à aimants permanents, caractérisé en ce qu'il comporte au moins une varistance (3) connectée en parallèle entre les bornes d'alimentation du moteur (1) pour assurer l'antiparasitage de celui-ci et simultanément améliorer le rendement et le couple de blocage de ce moteur.

2. Dispositif selon la revendication 1, caractérisé en ce qu'il comporte une varistance en parallèle sur chaque paire de balais du moteur.

## Patentansprüche

1. Störungsschutzeinrichtung für einen durch Permanentmagnet erregten Gleichstrommotor (1), dadurch gekennzeichnet, daß sie wenigstens einen Varistor (3) aufweist, die zu den Stromversorgungsklemmen des Motors (1) parallel geschaltet ist, um den Störschutz desselben zu bewirken und gleichzeitig den Wirkungsgrad und das Bremsmoment dieses Motors zu verbessern.

2. Einrichtung nach Anspruch 1, dadurch gekennzeichnet, daß sie einen Varistor parallel zu jedem Bürstenpaar des Motors enthält.

## Claims

1. An interference suppressor for a DC motor (1) which comprises a field including permanent magnets, characterized in that it comprises at least one varistor (3) for connection in parallel between the supply connection terminals of the motor (1) to ensure the suppression of the interference of the motor and also to improve the blocking torque of the motor.

2. A suppressor according to claim 1, characterized in that it comprises a varistor for connection in parallel to each pair of brushes of the motor.